Europäisches Patentamt

European Patent Office

Office européen des brevets

(11) Publication number: **0 292 673**
A2

## EUROPEAN PATENT APPLICATION

(21) Application number: 88105200.5

(51) Int. Cl.⁴ **A46B 15/00**

(22) Date of filing: 30.03.88

The title of the invention has been amended (Guidelines for Examination in the EPO, A-III, 7.3).

(30) Priority: 31.03.87 JP 46921/87 U
31.03.87 JP 46922/87 U

(43) Date of publication of application:
30.11.88 Bulletin 88/48

(84) Designated Contracting States:
DE FR GB IT SE

(71) Applicant: Tanaka, Toshiki
1005-17, Horiuchi Hayamamachi
Miura-gun Kanagawa-ken(JP)

(72) Inventor: Tanaka, Toshiki
1005-17, Horiuchi Hayamamachi
Miura-gun Kanagawa-ken(JP)

(74) Representative: Bockhorni, Josef, Dipl.-Ing. et al
Plinganserstrasse 18a Postfach 70 02 09
D-8000 München 70(DE)

(54) **Elastic dental floss and holder for elastic dental floss with or without toothbrush.**

(57) An elastic dental floss (5, 5a, 5b, 5c) for cleaning contact points between teeth and interdental spaces contains an annular extensible and contractible elastic member (5). The elastic member (5) is normally stored in a contracted state and brought to an extended state at the time of cleaning the contact points and the interdental spaces. The elastic member (5) when in the extended state has a cross-sectional dimension suited to clean the contact points and the interdental space and elasticity sufficient not to injure teeth, periodontal ligament and tooth gum. A dental cleaner (1, 1') contains a holder (1, 1') adapted to be held by a user's hand, a retaining member (3, 3', 4) provided to one end of the holder (1, 1') and the aforementioned dental floss (5, 5a, 5b, 5c) attached to the retaining member (3, 3', 4).

EP 0 292 673 A2

### FIG.2

This invention relates to an elastic dental floss for cleaning contact points between teeth and interdental spaces and a dental cleaner for attaching the elastic dental flass.

Dental flosses are known in the art that are adapted to clean contact points and spaces between adjoining teeth. Each of these flosses is formed by a non-elastic single yarn of a predetermined length that need be extended and affixed to a stationary retainer and exchanged by a new yarn by time consuming and labor consuming operation. Moreover, since the non-elastic yarn is used, tooth gum may be injured by the taut yarn during cleaning.

## OBJECTS AND SUMMARY OF THE INVENTION

It is a principal object of the present invention to provide an elastic dental floss that may be easily attached to and removed for exchange from a dental cleaner, and a dental cleaner for attaching such a dental floss.

It is another object of the present invention to provide an elastic dental floss in which there is no risk of injuring teeth, periodontal ligament or tooth gum at the time of removing food remainings and a dental cleaner for attaching the dental floss.

According to the present invention, there is provided an elastic dental floss for cleaning contact points between teeth and interdental spaces comprising an annular extensible and conractible member, the member being normally stored in a contracted state and brought to an extended or stretched state at the time of cleaning the contact points between teeth and the interdental spaces, the elastic member when in the extended state having a cross-sectional dimension suited to clean the contact points between teeth and the interdental spaces and elasticity sufficient not to injure teeth, periodontal ligament and tooth gum.

According to the present invention, there is also provided a dental cleaner for cleaning contact points between teeth and interdental spaces comprising holding means adapted to be held by a user's hand, a retaining member provided to one end of the holding means, and a dental floss attached to the retaining member, the dental floss including an annular extensible and conractible elastic member, the elastic member being normally stored in a contracted state and brought to an extended or stretched state at the time of cleaning the contact points between teeth and the interdental spaces, the elastic member when in the extended state having a cross-sectional dimension suited to clean the contact points between teeth and the interdental spaces and elasticity sufficient not to injure teeth, periodontal ligament and tooth gum.

## BRIEF DESCRIPTION OF THE DRAWINGS

Fig.1 is a front view showing an elastic dental floss of the present invention, when attached to a dental cleaner.

Fig.2 is a plan view of the dental cleaner shown in Fig.1.

Fig.3 is a plan view showing an embodiment of an elastic dental floss of the present invention.

Figs.4a and 4b are partial diagrammatic sectional views showing other embodiments of elastic dental flosses of the present invention.

Fig.4c is a partial diagrammatic view showing a further embodiment of an elastic dental floss of the present invention.

Fig.5 is a plan view showing another embodiment of the dental cleaner according to the present invention.

## PREFERRED EMBODIMENTS OF THE INVENTION

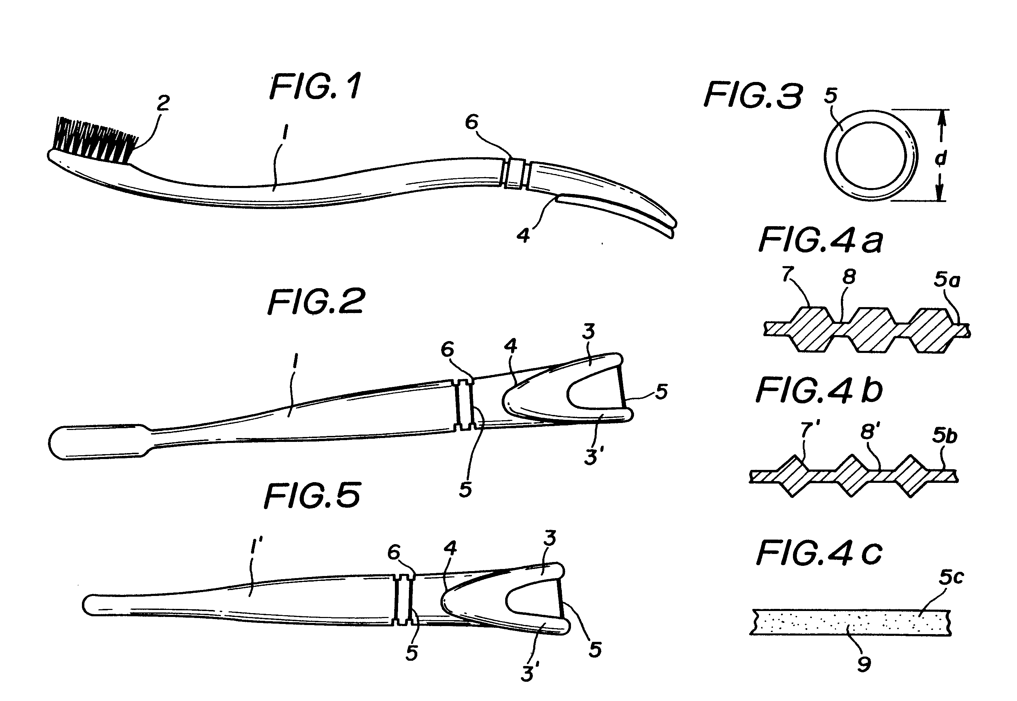

Referring to Figs.1 and 2, bifurcated projections 3, 3' are formed on one side at an extreme end of a holder 1 and on the other side a tooth brush 2 is provided. The bifurcated ends of the projections 3, 3' are spaced apart from each other by a distance sufficient for cleaning contact points between teeth and interdental spaces. These projections 3, 3' are preferably formed intergrally with the holder 1, but may be provided separately and affixed to the holder in any known manner. These projections 3, 3' are so profiled that the transverse cross-sectional width thereof is gradually increased downwards in Fig.1, or in a direction away from the main body of the holder 1, so that a retaining groove 4 is formed around the peripheral root portion of the projections 3, 3'. The projections 3, 3' may be projected only slightly and straightly vertically above the holder 1 with the retaining groove 4 being formed on the peripheral root portion of the projections 3, 3'. In any cases, the retaining groove 4 is formed for extending around the ends of the projections 3, 3'.

In Fig.3, there is shown an example of an elastic dental floss according to the present invention. The elastic dental floss 5 is an annular extensible and contractible elastic member and preferably formed of natural or synthetic rubber, such as polyisoprene, polybutadiene or neoprene rubber. The annular elastic dental floss 5 is engaged in the extended state in the retaining groove 4, as shown in Figs.1 and 2. For convenience in cleaning contact points and interdental spaces, the annular elastic dental floss 5 preferably has a diameter (d) (see Fig.3) of about 5 to 80 mm and the cross-sectional dimension of about 0,6 to 1,6 mm. The overall peripheral length of the retaining groove 4 may be designed so that the elastic dental floss 5 when engaged in the groove 4 is extended to a length of about 6 to 16 times its unextended length. The cross-sectional dimension of the elastic dental floss of 30 to 80 microns in the extended or elongated state is desirable from the viewpoint of buccal anatomy in that teeth, periodontal ligament or tooth gum is not thereby impaied during cleaning, and in that it satisfies the condition for the floss dimension convenient for removing food remainings in the interdental spaces of not less than 30 microns. For facilitated removal of the food remainings from the interdental spaces, the annular elastic dental flosses 5a and 5b according to the embodiments of Figs.4a and 4b are formed with a series of radial slots 8, 8' on the outer periphery thereof so that portions of larger thickness are alternated by portions of reduced thickness. Thus, in the embodiment shown in Fig.4a, the annular elastic dental floss 5a is formed with intermediate portions of enlarged thickness having substantially a hexagonal cross-section 7 alternated by portions of reduced thickness 8. In the embodiment shown in Fig.4b, the annular elastic dental floss 5b is formed with portions of enlarged thickness having substantially quadratic cross-section 7' alternated by intermediate portions of reduced thickness 8'. The portions with enlarged thickness 7, 7' and those with reduced thickness 8, 8' may be provided at a constant pitch or at irregular intervals, with the value of the pitch or interval being selected freely. Fig.4c shows a dental floss 5c having fine particles of alumina, glass, etc. affixed to its surface for removing tooth plaque or dental tartar. For affixing these fine particles 9 to the surface of the floss 5, the floss may be immersed in a rubber latex solution containing these particles, then extracted from the solution and dried.

As the elastic floss 5, it is not desirable from the dentistic point of view to use an elastic yarn-like floss, such as a marketed O-ring, having a cross-sectional diameter of not less than 100 microns under the elongated state. The other reason is that the elastic floss with a larger diameter when under a tensile force may itself be broken resulting in injury to dental mucosa. It is therefore preferred to use an annular dental floss less in diameter than the conventional O-ring and having a larger tensile strength. It is also possible that the annular dental floss be immersed in a suitable perfume for possibly leaving an aromatic feel in the mouth.

The holder 1 shown in Figs.1 and 2 are provided with peripheral slots 6 for accommodating a desired number of spare flosses 5, 5a, 5b or 5c.

Fig.5 shows a dental cleaner which is not provided with a brush 2 but only provided with a holder 1'.

## Claims

1. An elastic dental floss (5, 5a, 5b, 5c) for cleaning contact points between teeth and interdental spaces comprising an annular extensible and contractible elastic member (5), said member being normally stored in a contracted state and brought to an extended state at the time of cleaning the contact points between teeth and the interdental spaces, said elastic member (5) when in the extended state having a cross-sectional dimension suited to clean the contact points between teeth and the interdental spaces and elasticity sufficient not to injure teeth, periodontal ligament and tooth gum.

2. The elastic dental floss (5a, 5b) according to claim 1 wherein said elastic member (5a, 5b) has varying cross-sectional dimensions along the longitudinal direction thereof.

3. The elastic dental floss (5, 5a, 5b, 5c) according to claim 1 or 2 wherein said elastic member (5, 5a, 5b, 5c) is formed of natural rubber or synthetic rubber.

4. The elastic dental floss (5c) according to any one of claims 1 to 3 wherein fine particles (9) are affixed to the surface of said elastic member (5c) for removing tooth plaque.

5. The elastic dental floss according to claim 4 wherein said fine particles (9) are formed of alumina, glass or a mixture thereof.

6. The elastic dental floss (5, 5a, 5b, 5c) according to any one of claims 1 to 5 wherein the cross-sectional dimension of said elastic member (5, 5a, 5b, 5c) when in the extended state is 30 to 80 microns.

7. A dental cleaner (1, 1') for cleaning contact points between teeth and interdental spaces comprising:

holding means (1, 1') adapted to be held by a user's hand,

a retaining member (3, 3', 4) provided to one end of said holding means (1, 1'), and

a dental floss (5, 5a, 5b, 5c) attached to said retaining member (3, 3', 4),

said dental floss (5, 5a, 5b, 5c) including an annular extensible and contractible elastic member (5), said elastic member being normally stored in a contracted state and brought to an extended state at the time of cleaning the contact points between teeth and the interdental spaces, said elastic member (5) when in the extended state having a cross-sectional dimension suited to clean the contact points between teeth and the interdental spaces and elasticity sufficient not to injure the teeth, periodontal ligament and tooth gum.

8. The dental cleaner (1) according to claim 7 wherein a tooth brush (2) for cleaning the teeth is privided in the vicinity of the other end of said holding means (1).

9. The dental cleaner (1, 1') according to claim 7 or 8 wherein said holding means (1, 1') includes a holder (1, 1') in the form of a shank and wherein said retaining member (3, 3', 4) includes bifurcated projections (3, 3') at one end of said holder (1, 1') and a groove (4) for placing said dental floss (5, 5a, 5b, 5c) taut and in the extended state between said bifurcated projections (3, 3').

10. The dental cleaner (1, 1') according to claim 7, 8 or 9 wherein said holding means (1, 1') includes at least one slot (6) for storing said dental floss (5, 5a, 5b, 5c) in the contracted state.

FIG.1

FIG.2

FIG.5

FIG.3

FIG.4a

FIG.4b

FIG.4c

0 292 673